# EUROPEAN PATENT SPECIFICATION

(11) **EP 1 922 169 B1**
(45) Date of publication and mention of the grant of the patent: **27.06.2012**
(21) Application number: 06851270.6
(22) Date of filing: 09.08.2006
(51) Int. Cl.: B22F 9/28

(54) **PROCESS FOR THE USE OF METAL CARBONYLS FOR THE PRODUCTION OF NANO-SCALE METAL PARTICLES**
VERFAHREN ZUR VERWENDUNG VON METALLCARBONYLEN ZUR HERSTELLUNG NANOSKALIGER METALLPARTIKEL
PROCÉDÉ DESTINÉ À L'UTILISATION DE MÉTAUX CARBONYLES EN VUE DE PRODUIRE DES NANOPARTICULES MÉTALLIQUES

(30) Priority: 10.08.2005 US 201356; 10.08.2005 US 200986; 10.08.2005 US 201354; 10.08.2005 US 200929
(43) Date of publication of application: 21.05.2008
(73) Proprietor: Directa Plus S.p.A., 22074 Lommazzo (CO) (IT)
(72) Inventor: MERCURI, Robert, A., Seven Hills, OH 44131 (US)
(74) Representative: Cremer & Cremer
(86) International application number: PCT/US2006/030999
(87) International publication number: WO 2007/136389

(56) References cited:
- EP-A1- 1 500 450
- RU-C1- 2 161 549
- US-A- 2 900 245
- US-A- 2 900 245
- US-A- 3 075 494
- US-A- 3 158 499
- US-A- 3 158 499
- US-A- 3 900 646
- US-A- 3 955 962
- US-A- 3 998 758
- US-A- 4 657 888
- US-A1- 2003 097 903
- HUH S H ET AL: "A design of a nanometer size metal particle generator: Thermal decomposition of metal carbonyls" REVIEW OF SCIENTIFIC INSTRUMENTS, AIP, MELVILLE, NY, US, vol. 70, no. 11, 1 November 1999 (1999-11-01), pages 4366-4369, XP012037195 ISSN: 0034-6748
- DATABASE WPI Week 200124 Thomson Scientific, London, GB; AN 2001-233154 XP002575221 & RU 2 161 549 C1 (GIPRONIKEL INST STOCK CO) 10 January 2001 (2001-01-10)
- HUH S.H. ET AL.: 'A design of nanometric size metal particle generator: Thermal decompositon of metal carbonyls' REVIEW OF SCIENTIFIC INSTRUMENTS vol. 70, no. 11, November 1999, pages 4366 - 4369, XP008128704
- Salvatore Giuffrida ET AL: "Photochemical Mechanism of the Formation of Nanometer-Sized Copper by UV Irradiation of Ethanol Bis(2,4-pentandionato)copper(II) Solutions", Chemistry of materials, vol. 16, no. 7, 1 April 2004 (2004-04-01), pages 1260-1266, XP55000430, ISSN: 0897-4756, DOI: 10.1021/cm034782h

## Description

### Technical Field

The present invention relates to a process for the production of nano-scale particles, especially non-noble nano-scale particles, using metal carbonyls. By "non-noble metal" is meant a metal other than one of the noble metals (generally considered to be gold, silver, platinum, palladium, iridium, medium, mercury, ruthenium and osmium). The resulting nano-scale particles are useful for catalysis and other purposes. By the practice of the present invention, nano-scale particles can be produced from metal carbonyls and collected with greater speed, precision and flexibility than can be accomplished with conventional processing. Thus, the invention provides a practical and cost-effective means for preparing such nano-scale particles.

### Background Art

Catalysts are becoming ubiquitous in modem chemical processing. Catalysts are used in the production of materials such as fuels, lubricants, refrigerants, polymers, drugs, etc., as well as playing a role in water and air pollution mediation processes. Indeed, catalysts have been ascribed as having a role in fully one third of the material gross national product of the United States, as discussed by Alexis T. Bell in "The Impact of Nanoscience on Heterogeneous Catalysis" (Science, Vol. 299, pg. 1688, 14 March 2003).

Generally speaking, catalysts can be described as small particles deposited on high surface area solids. Traditionally, catalyst particles can range from the sub-micron up to tens of microns. One example described by Bell is the catalytic converter of automobiles, which consist of a honeycomb whose walls are coated with a thin coating of porous aluminum oxide (alumina). In the production of the internal components of catalytic converters, an aluminum oxide wash coat is impregnated with nanoparticles of a platinum group metal catalyst material. In fact, most industrial catalysts used today include platinum group metals especially platinum, rhodium and iridium or alkaline metals like cesium, at times in combination with other metals such as iron or nickel.

The size of these particles has been recognized as extremely significant in their catalytic function. Indeed it is also noted by Bell that the performance of a catalyst can be greatly affected by the particle size of the catalyst particles, since properties such as surface structure and the electronic properties of the particles can change as the size of the catalyst particles changes.

In his study on nanotechnology of catalysis presented at the Frontiers in Nanotechnology Conference on May 13, 2003, Eric M. Stuve of the Department of Chemical Engineering of the University of Washington, described how the general belief is that the advantage of the use of nano-sized particles in catalysis is due to the fact that the available surface area of small particles is greater than that of larger particles, thus providing more metal atoms at the surface to optimize catalysis using such nano-sized catalyst materials. However, Stuve points out that the advantages of the use of nano-sized catalyst particles may be more than simply due to the size effect. Rather, the use of nanoparticles can exhibit modified electronic structure and a different shape with actual facets being present in the nanoparticles, which provide for interactions which can facilitate catalysis. Indeed, Cynthia Friend, in "Catalysis On Surfaces" (Scientific American, April 1993, p. 74), posits catalyst shape, and, more specifically, the orientation of atoms on the surface of the catalyst particles, as important in catalysis. In addition, differing mass transport resistances may also improve catalyst function. Thus, the production of nano-sized metal particles for use as catalysts on a more flexible and commercially efficacious platform is being sought. Moreover, other applications for nano-scale particles are being sought, whether for the platinum group metals traditionally used for catalysis or other metal particles.

Conventionally, however, catalysts are prepared in two ways. One such process involves catalyst materials being deposited on the surface of carrier particles such as carbon blacks or other like materials, with the catalyst-loaded particles then themselves being loaded on the surface at which catalysis is desired. One example of this is in the fuel cell arena, where carbon black or other like particles loaded with platinum group metal catalysts are then themselves loaded at the membrane/electrode interface to catalyze the breakdown of molecular hydrogen into monatomic hydrogen, for its separation into its component protons and electrons, with the resulting electrons passed through a circuit as the current generated by the fuel cell; on the opposing surface, molecular oxygen is separated into monatomic oxygen for eventual combination with the proton and electron to form water. One major drawback to the preparation of catalyst materials through loading on a carrier particle is in the amount of time the loading reactions take, which can be measured in hours in some cases.

To wit, in U.S. Patent 6,716,525, Yadav and Pfaffenbach describe the dispersing of nano-scale powders on coarser carrier powders in order to provide catalyst materials. The carrier particles of Yadav and Pfaffenbach include oxides, carbides, nitrides, borides, chalcogenides, metals and alloys. The nanoparticles dispersed on the carriers can be any of many different materials according to Yadav and Pfaffenbach, including precious metals such as platinum group metals, rare earth metals, the so-called semi-metals, as well as non-metallic materials, and even clusters such as fullerenes, alloys and nanotubes. In the process of production, a slurry precursor comprising carrier particles is fed into a reactor e. g. in a cyclonic flow pattern with process temperatures greater than 500 °C in a combustion flame or plasma in the reactor, where nano-particles interact with carrier particles in order to collect nano-particles of metal on carrier particles. The nano-particles of metal have a size distribution, which can not be separated, and their size is significantly smaller than the carrier particles. Furthermore separation methods like centrifugation filtering are applied to product carrier particles before harvesting the product from a filter.

Alternatively, the second common methods for preparing catalyst materials involves directly loading catalyst metals such as platinum group metals on a support without the use of carrier particles which can interfere with the catalytic reaction. For example, many automotive catalytic converters, as discussed above, have catalyst particles directly loaded on the aluminum oxide honeycomb which forms the converter structure. The processes needed for direct deposition of catalytic metals on support structures, however, are generally operated at extremes of temperature and/or pressures. For instance, one such process is chemical sputtering at temperatures in excess of 1,500 °C and under conditions of high vacuum. Thus, these processes are difficult and expensive to operate and also involve line-of-sight reactions, precluding fully utilization of the support structure.

In an attempt to provide nano-scale catalyst particles, Bert and Bianchini, in International Patent Application Publication No. WO 2004/036674, suggest a process using a templating resin to produce nano-scale particles for fuel cell applications. Even if technically feasible, however, the Bert and Bianchini methods require high temperatures (on the order of 300 °C to 800 °C), and require several hours. Accordingly, these processes are of limited value.

Taking a different approach, Sumit Bhaduri, in "Catalysis With Platinum Carbonyl Clusters," Current Science, Vol. 78, No. 11, 10 June 2000, asserts that platinum carbonyl clusters, by which is meant polynuclear metal carbonyl complexes with three or more metal atoms, have potential as redox catalysts, although the Bhaduri publication acknowledges that the behavior of such carbonyl clusters as redox catalysts is not understood in a comprehensive manner. Indeed, metal carbonyls have been recognized for use in catalysis in other applications.

Several approaches for the production of metallic films for applications as catalysts on different substrates using thermal decomposition of metal carbonyls are discussed in the patents US 3 075 494 A (Toulmin), US 3 158 499 A (Jenkin), and US 3 998 758 A (Clyde). Other applications of metal carbonyl decomposition can be found in EP 1 500 450 A1 (Kuhn) describing the production of metallic foams and in US 4 657 888 A (Mesters et al.) describing the formation of metal alloys.

In accordance to the teachings of US 3 955 962 A (Dawihl and Eicke), fibers of metal having a very large aspect ratio are grown in a magnetic field using metal carbonyls. Metal atoms agglomerate under the influence of the flux lines in parallel on a support.

A closed loop apparatus and process for the production of small metal particles is shown in US 2 900 245 A (Béller), in particular in the figure of said patent. Using a circulating gas heater and a reactor heated by a heating medium, thermal decomposition of a metal carbonyl may be carried out under selected conditions of temperature, pressure and gas velocity. Metal particles in a dimension of micrometers can be produced in said closed loop process by starting off from respective metal carbonyls.

The process disclosed in RU 2 161 549 C1 (Rjabko et al.) is preferably used for the production of Ni-nanoparticles with controlled size in the range 0.5 µm to 5 µm, where control is obtained mainly by means of temperature. This method uses thermal decomposition of Ni carbonyl diluted with the diluent gas carbon oxide from 10 up to 80 vol. % with addition of oxygen by 0,01 to 0,1 vol. %.

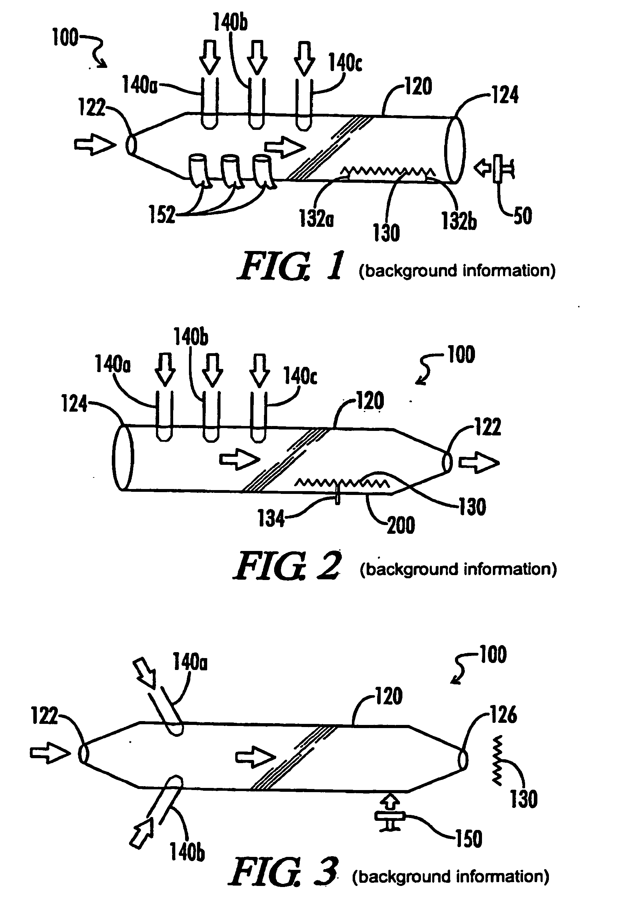

In the article by S. H. Huh et al., Rev. Sci. Inst. 70, Nr. 11, 4366 to 4369 (1999) an electrically heated filament is used to decompose metal carbonyls and nanometre sized metal particles are collected from an experimental setup closed reactor with one gas feeder (S. H. Huh et al., figure 1). The article also describes formation of alloy nanometre sized particles from iron and molybdenum.

Metal carbonyls have also been used as, for instance, anti-knock compounds in unleaded gasolines. However, more significant uses of metal carbonyls are in the production and/or deposition of the metals present in the carbonyl, since metal carbonyls are generally viewed as easily decomposed and volatile resulting in deposition of the metal and carbon monoxide.

Generally speaking, carbonyls are transition metals combined with carbon monoxide and have the general formula Mₓ(CO)_{y}, where M is a metal in the zero oxidation state and where x and y are both integers. While many consider metal carbonyls to be coordination compounds, the nature of the metal to carbon bond leads some to classify them as organometallic compounds. In any event, the metal carbonyls have been used to prepare high purity metals, although not for the production of nano-scale metal particles. As noted, metal carbonyls have also been found useful for their catalytic properties such as for the synthesis of organic chemicals in gasoline antiknock formulations.

While, as noted, catalyst materials are traditionally formed of noble metals, such as the platinum group metals, the formation of nano-scale particles, with the resulting surface area and surface effect advantages, may permit the use of non-noble metals, such as nickel, iron, etc., as catalyst materials. The resulting cost savings can be significant, and can permit the more widespread use of catalytic reactions in industrial processing.

Accordingly, what is needed is a process, especially a continuous process, for the production of nano-scale particles, especially non-noble metal nano-scale particles, for use as, e. g., catalyst materials. The desired process can be used for the preparation of nano-scale particles loaded on a carrier particle but, significantly, can also be used for the deposit of catalytic nano-scale particles directly on a surface without the requirement for extremes in temperature and/or pressures.

### Disclosure of the Invention

A process according to claim 1 for the production of nano-scale particles using metal carbonyl starting materials is presented. By nano-scate particles is meant particles having an average diameter of no greater than 250 nanometers (nm). More preferably, the particles produced by the inventive system have an average diameter no greater than 20 nm.

The particles produced by the invention can be roughly spherical or isotropic, meaning they have an aspect ratio of about 1.4 or less, although particles having a higher aspect ratio can also be prepared and used as catalyst materials. Aspect ratio refers to the ratio of the largest dimension of the particle to the smallest dimension of the particle (thus, a perfect sphere has an aspect ratio of 1.0). The diameter of a particle for the purposes of this invention is taken to be the average of all of the diameters of the particle, even in those cases where the aspect ratio of the particle is greater than 1.4.

In the practice of the present invention, a metal carbonyl, such as a non-noble metal carbonyl, is fed into a reactor vessel which can comprise a conduit and sufficient energy to decompose the carbonyl applied, such that the carbonyl decomposes and nano-scale metal particles are collected in a collector. The carbonyl employed in the invention depends on the nano-scale metal particles desired to be produced. In other words, if the desired nano-scale particles comprise nickel and iron, the metal carbonyls employed can be nickel carbonyl, Ni(CO)₄, and iron carbonyl, Fe(CO)₅; likewise, if noble metal nano-scale metal particles are sought, then noble metal carbonyls are used as the starting materials. In addition, polynuclear metal carbonyls such as diiron nonacarbonyl, Fe₂(CO)₉, triiron dodecacarbonyl, Fe₃(CO)₁₂, decacarbonyldimanganese, Mn₂(CO)₁₀; indeed, many of the noble metal carbonyls can be provided as polynuclear carbonyls, such as dodecacarbonyltriruthenium, Ru₃(CO)₁₂, and tri-µ-carbonylnonacarbonyltetrairidium, Ir₄(CO)₁₂. Also, heteronuclear carbonyls, like Ru₂Os(CO)₁₂, Fe₂Ru(CO)₁₂ and Zn[Mn(CO)₅]₂ are known and can be employed in the production of nano-scale metal particles in accordance with the present invention. Indeed, the polynuclear metal carbonyls can be particularly useful where the nano-scale metal particles desired are alloys or combinations of more than one metallic specie.

The metal carbonyls useful in producing nano-scale metal particles in accordance with the present invention can be prepared by a variety of methods, many of which are described in "Kirk-Othmer Encyclopedia of Chemical Technology", Vol. 5, pp. 131-135 (Wiley Interscience 1992). For instance, metallic nickel and iron can readily react with carbon monoxide to form nickel and iron carbonyls, and it has been reported that cobalt, molybdenum and tungsten can also react carbon monoxide, albeit under conditions of higher temperature and pressure. Other methods for forming metal carbonyls include the synthesis of the carbonyls from salts and oxides in the presence of a suitable reducing agent (indeed, at times, the carbon monoxide itself can act as the reducing agent), and the synthesis of metal carbonyls in solvent systems such as ammonia. In addition, the condensation of lower molecular weight metal carbonyls can also be used for the preparation of higher molecular weight species, and carbonylation by carbon monoxide exchange can also be employed.

The synthesis of polynuclear and heteronuclear metal carbonyls, including those discussed above, is usually effected by metathesis or addition. Generally, these materials can be synthesized by a condensation process involving either a reaction induced by coordinatively unsaturated species or a reaction between coordinatively unsaturated species in different oxidation states. Although high pressures are normally considered necessary for the production of polynuclear and heteronuclear carbonyls (indeed, for any metal carbonyls other than those of transition metals), the synthesis of polynuclear carbonyls, including manganese carbonyls, under atmospheric pressure conditions is also believed feasible.

It must be bome in mind in working with the metal carbonyls, that care in handling must be used at all times, since exposure to metal carbonyls can be a serious health threat. Indeed, nickel carbonyl is considered to be one of the more poisonous inorganic industrial compounds. While other metal carbonyls are not as toxic as nickel carbonyl, care still needs to be exercised in handling them.

The processing of the metal carbonyls to form nano-scale metal particles utilizes an apparatus comprising a reactor vessel, at least one feeder for feeding or supplying the metal carbonyl into the reactor vessel, a collector which is operatively connected to the reactor vessel for collection of nano-scale metal particles produced on decomposition of the carbonyl, and a source of energy capable of decomposing the carbonyl. The source of energy should act on the metal carbonyl(s) employed such that the carbonyl(s) decompose to provide nano-scale metal particles which are collected by the collector.

The reactor vessel can be formed of any material which can withstand the conditions under which the decomposition of the carbonyl occurs. Generally, where the reactor vessel is a closed system, that is, where it is not an open ended vessel permitting reactants to flow into and out of the vessel, the vessel can be under subatmospheric pressure, by which is meant pressures as low as about 333 hPa (250 millimeters (mm)). Indeed, the use of subatmospheric pressures, as low as about 1.33 hPA (1 mm) of pressure, can accelerate decomposition of the carbonyl and provide smaller nano-scale particles. However, one advantage of the inventive process is the ability to produce nano-scale particles at generally atmospheric pressure, i.e., about 1013 hPa (760 mm). Alternatively, there may be advantage in cycling the pressure, such as from sub-atmospheric to generally atmospheric or above, to encourage nano- deposits within the structure of the carrier particles or supports. Of course, even in a so-called "closed system," there needs to be a valve or like system for relieving pressure build-up caused, for instance, by the generation of carbon monoxide (CO) from decomposition of the metal carbonyl or other byproducts. Accordingly, the use of the expression "closed system" is meant to distinguish the system from a flow-through type of system as discussed hereinbelow.

When the reactor vessel is a "flow-through" reactor vessel, that is, a conduit through which the reactants flow while reacting, the flow of the reactants can be facilitated by drawing a partial vacuum on the conduit, although no lower than about 333 hPa (250 mm) is necessary in order to draw the reactants through the conduit towards the vacuum apparatus, or a flow of an inert gas such as argon or nitrogen can be pumped through the conduit to thus carry the reactants along the flow of the inert gas.

Indeed, the flow-through reactor vessel can be a fluidized bed reactor, where the reactants are borne through the reactor on a stream of a fluid. This type of reactor vessel may be especially useful where the nano-scale metal particles produced are intended to be loaded on support materials, like carbon blacks or the like, or where the metal particles are to be loaded on an ion exchange or similar powdered resinous material.

The at least one feeder supplying the carbonyl into the reactor vessel can be any feeder sufficient for the purpose, such as an injector which carries the metal carbonyl along with a jet of a gas such as an inert gas like argon or nitrogen, to thereby carry the carbonyl along the jet of gas through the injector nozzle and into the reactor vessel. The gas employed can be a reactant, like oxygen or ozone, rather than an inert gas. This type of feeder can be used whether the reactor vessel is a closed system or a flow-through reactor.

A cyclonic collector suitable for collecting the nano-scale particles for re-use is employed. Supports useful in the practice of the invention can be any material on which the nano-scale metal particles produced from decomposition of the metal carbonyl can be deposited. In a preferred embodiment, the support is the material on which the catalyst metal is ultimately destined, such as the aluminum oxide honeycomb of a catalytic converter in order to deposit nano-scale particles on catalytic converter components without the need for extremes of temperature and pressure required by sputtering and like techniques.

The collector can be disposed within the reactor vessel (indeed this is practical in a flow-through reactor). In a flow-through reactor, the flow of nano-scale metal particles produced by decomposition of the carbonyl is directed into a cyclonic collector which collects the nano-scale particles in a suitable container for future use.

The energy employed to decompose the carbonyl can be any form of energy capable of accomplishing this function; indeed, the type or intensity of energy employed can depend on the type of carbonyl being decomposed. For instance, electromagnetic energy such as infrared, visible, or ultraviolet light of the appropriate wavelengths can be employed. Additionally, microwave and/or radio wave energy, or other forms of sonic energy can also be employed (example, a spark to initiate "explosive" decomposition assuming suitable moiety and pressure), provided the metal carbonyl is decomposed by the energy employed. Thus, microwave energy, at a frequency of about 2.4 gigahertz (GHz) or induction energy, at a frequency which can range from as low as about 180 hertz (Hz) up to as high as about 13 mega Hz, can be employed. A skilled artisan would readily be able to determine the form of energy useful for decomposing the metal carbonyls which can be employed in the inventive process.

Because of the relatively low decomposition temperature of metal carbonyls, generally less than about 150 °C, and often less than about 80 °C, one preferred form of energy which can be employed to decompose the carbonyl is heat energy supplied by, e.g., heat lamps, radiant heat sources, or the like. In such case, the temperatures needed are no greater than about 250 °C to ensure effective decomposition of a high percentage of the metal carbonyls in the reactor vessel. Indeed, generally, temperatures no greater than about 200 °C are needed to decompose the carbonyl to effectively produce nano-scale metal particles therefrom.

Depending on the source of energy employed, the reactor vessel should be designed so as to not cause deposit of the nano-scale metal particles on the vessel itself (as opposed to the support or collector) as a result of the application of the source of energy. In other words, if the source of energy employed is heat, and the reactor vessel itself becomes heated to a temperature at or somewhat higher than the decomposition temperature of the carbonyl during the process of applying heat to the carbonyl to effect decomposition, then the carbonyl will decompose at the walls of the reactor vessel, thus coating the reactor vessel walls with nano-scale metal particles or even bulk metal deposits rather than collecting the nano-scale metal particles with the collector (one exception to this general rule occurs if the walls of the vessel are so hot that the decomposable carbonyl decomposes within the reactor vessel and not on the vessel walls, as discussed in more detail below).

One way to avoid this is to direct the energy directly at the collector. For instance, if heat is the energy applied for decomposition of the metal carbonyl, the collector can be equipped with a source of heat itself, such as a resistance heater in or at a surface of the support or collector such that the collector is at the temperature needed for decomposition of the carbonyl and the reactor vessel itself is not. Thus, decomposition occurs at the collector and formation of nano-scale particles occurs principally at the collector. When the source of energy employed is other than heat, the source of energy can be chosen such that the energy couples with the collector, such as when microwave or induction energy is employed. In this instance, the reactor vessel should be formed of a material which is relatively transparent to the source of energy, especially as compared to the collector.

Similarly, especially in situations when the collector is disposed outside the reactor vessel when a flow-through reactor vessel is employed with a support collector at its terminus (a cyclonic or like collector for collecting the nano-scale metal particles for deposit in a suitable container), the decomposition of the decomposable carbonyl occurs as the metal carbonyl is flowing through the flow-through reactor vessel and the reactor vessel should be transparent to the energy employed to decompose the carbonyl. Alternatively, whether or not the collector is inside the reactor vessel, or outside it, the reactor vessel can be maintained at a temperature below the temperature of decomposition of the carbonyl, where heat is the energy employed. One way in which the reactor vessel can be maintained below the decomposition temperatures of the metal carbonyl is through the use of a cooling medium like cooling coils or a cooling jacket. A cooling medium can maintain the walls of the reactor vessel below the decomposition temperatures of the carbonyl, yet permit heat to pass within the reactor vessel to heat the metal carbonyl and cause decomposition of the carbonyl and production of nano-scale metal particles in the designed manner.

In an alternative embodiment which is especially applicable where both the walls of the reactor vessel and the gases in the reactor vessel are generally equally susceptible to the heat energy applied (such as when both are relatively transparent), heating the walls of the reactor vessel, when the reactor vessel is a flow-through reactor vessel, to a temperature substantially higher than the decomposition temperature of the decomposable moiety can permit the reactor vessel walls to themselves act as the source of heat. In other words, the heat radiating from the reactor walls will heat the inner spaces of the reactor vessel to temperatures at least as high as the decomposition temperature of the decomposable moiety. Thus, the moiety decomposes before impacting the vessel walls, forming nano-scale particles which are then carried along with the gas flow within the reactor vessel, especially where the gas velocity is enhanced by a vacuum. This method of generating decomposition heat within the reactor vessel is also useful where the nano-scale particles formed from decomposition of the decomposable moiety are being attached to carrier materials (like carbon black) also being carried along with the flow within the reactor vessel. In order to heat the walls of the reactor vessel to a temperature sufficient to generate decomposition temperatures for the decomposable moiety within the reactor vessel, the walls of the reactor vessel are preferably heated to a temperature which is significantly higher than the temperature desired for decomposition of the decomposable moiety(ies) being fed into the reactor vessel, which can be the decomposition temperature of the decomposable moiety having the highest decomposition temperature of those being fed into the reactor vessel, or a temperature selected to achieve a desired decomposition rate for the moieties present. For instance, if the decomposable moiety having the highest decomposition temperature of those being fed into the reactor vessel is nickel carbonyl, having a decomposition temperature of 50 °C, then the walls of the reactor vessel should preferably be heated to a temperature such that the moiety would be heated to its decomposition temperature several (at least three) millimeters from the walls of the reactor vessel. The specific temperature is selected based on internal pressure, composition and type of moiety, but generally is not greater than 250 °C and is typically less than 200 °C to ensure that the internal spaces of the reactor vessel are heated to at least 50 °C.

In any event, the reactor vessel, as well as the feeders, can be formed of any material which meets the requirements of temperature and pressure discussed above. Such materials include a metal, graphite, high density plastics or the like. Most preferably the reactor vessel and related components are formed of a transparent material, such as quartz or other forms of glass, including high temperature glass commercially available as Pyrex^{®} materials.

Thus, in the process of the present invention, at least one metal carbonyl, especially a non-noble metal carbonyl, is fed into a reactor vessel where it is exposed to a source of energy sufficient to decompose the carbonyl and produce nano-scale metal particles. The metal carbonyl is fed into a flow-through reactor where the flow is created by drawing a vacuum or flowing an inert gas through the flow-through reactor. The energy applied is sufficient to decompose the carbonyl in the reactor or as it as flowing through the reactor, and free the metal from the carbonyl and thus create nano-scale metal particles which are collected in a collector. Where heat is the energy used to decompose the carbonyl, temperatures no greater than 250 °C, more preferably no greater than 200 °C are required to produce nano-scale metal particles, which at the surface of the substrate for which they are ultimately intended without the use of carrier particles and in a process requiring only seconds and not under extreme conditions of temperature and pressure. Indeed, the process of the present invention often requires less than 5 seconds for the production of nano-scale metal particles.

In one embodiment of the inventive process, a single feeder feeds a single carbonyl into the reactor vessel for formation of nano-scale metal particles. In another embodiment, however, a plurality of feeders each feeds metal carbonyls into the reactor vessel. In this way, all feeders can feed the same carbonyl or different feeders can feed different carbonyls, such as additional metal carbonyls, so as to provide nano-scale particles containing different metals such as platinum-nickel-iron combinations or nickel-iron combinations as desired, in proportions determined by the amount of the carbonyl fed into the reactor vessel by each feeder. For instance, by feeding different carbonyls through different feeders, one can produce a nano-scale particle having a core of a first metal, with domains of a second or third, etc. metal coated thereon. Indeed, altering the carbonyl fed into the reactor vessel by each feeder can alter the nature and/or constitution of the nano-scale particles produced. In other words, if different proportions of metals making up the nano-scale particles, or different orientations of the metals making up the nano-scale particles are desired, altering the metal carbonyl fed into the reactor vessel by each feeder can produce such different proportions or different orientations.

Indeed, in the case of the flow-through reactor vessel, each of the feeders can be arrayed about the circumference of the conduit forming the reactor vessel at approximately the same location, or the feeders can be arrayed along the length of the conduit so as to feed metal carbonyls into the reactor vessel at different locations along the flow path of the conduit to provide further control of the nano-scale particles produced.

While it is anticipated that the process may also produce particles that are larger than nano-scale in size along with the nano-scale particles desired, the larger particles can be separated from the sought-after nano-scale particles through the use of the cyclonic separator or because of their differing deposition rates on a collector.

Therefore it is an object of the present invention to provide a process for the production of nano-scale metal particles using metal carbonyl starting materials as defined in claim 1.

It is another object of the present invention to provide a process capable of producing non-noble metal nano-scale particles under conditions of temperature and/or pressure less extreme than conventional processes.

It is yet another object of the present invention to provide a process for preparing non-noble metal nano-scale particles which can be collected for further use or treatment.

These objects and others which will be apparent to the skilled artisan upon reading the following description, can be achieved by feeding at least one metal carbonyl into a reactor vessel, especially one comprising a conduit; exposing the metal carbonyl to a source of energy sufficient to decompose the metal carbonyl and produce nano-scale metal particles; and collecting the nano-scale metal particles. Preferably, the temperature within the reactor vessel is no greater than about 250 °C. The pressure within the reactor vessel is preferably generally atmospheric, but pressures which vary between about 1.33 hPa (1 mm) to about 2666 hPa (2000 mm) can be employed.

The reactor vessel is advantageously formed of a material which is relatively transparent to the energy supplied by the source of energy, as compared to either the support or collector or the metal carbonyl, such as where the source of energy is a source of radiant heat. In fact, the support or collector can have incorporated therein a resistance heater, or the source of energy can be a heat lamp. Where the energy is heat, a cooling medium such as cooling coils or a cooling jacket can be disposed about the reactor vessel to cool the vessel.

The collector can be positioned within the reactor vessel. However, the reactor vessel can be a flow-through reactor vessel comprising a conduit, in which case the collector can be disposed either external to the reactor vessel or within the reactor vessel.

It is to be understood that the foregoing general description presents embodiments of the invention, and is intended to provide an overview or framework for understanding the nature and character of the invention as it is claimed. The accompanying drawings and the following detailed description are included to provide a further understanding, and are incorporated in and constitute a part of this specification. The drawings together with the description serve to explain principles and operations.
Fig. 1 is a side plan view of an apparatus for the production of nano-scale metal particles from metal carbonyl starting materials utilizing a "flow-through" reactor vessel not belonging to the present invention.
Fig. 2 is an alternative embodiment of the apparatus of Fig. 1; it does not belong to the present invention.
Fig. 3 is another alternative embodiment of the apparatus of Fig. 1, using a support external to the flow-through reactor vessel, it does not belong to the present invention.

**Useful aspects of an apparatus used in a process for production of nano-scale particles**

Referring now to the drawings (which provide additional background information), an apparatus for the production of nano-scale particles is generally designated by the numeral 100. In Figs. 1-3 apparatus 100 is a flow-through reaction apparatus comprising flow-through reactor vessel 120.

It will be noted that Figs. 1-3 show apparatus 100 in a certain orientation. However, it will be recognized that other orientations are equally applicable. For instance, when under vacuum, reactor vessel can be in any orientation for effectiveness. Likewise, in flow-through reactor vessel 120, the flow of inert carrier gas and metal carbonyls or the flow of metal carbonyls as drawn by a vacuum (or combinations thereof) in Figs. 1-3 can be in any particular direction or orientation and still be effective. In addition, the terms "up" "down" "right" and "left" as used herein refer to the orientation of apparatus 100 shown in Figs. 1-3.

As illustrated in Figs. 1-3, apparatus 100 comprises a flow-through reactor vessel 120 which includes a port, denoted 122, for either providing an inert gas or drawing a vacuum from reactor vessel 120 to thus create flow for the metal carbonyls to be reacted to produce nano-scale metal particles. In addition, apparatus 100 includes feeders 140a, 140b, 140c, which can be disposed about the circumference of reactor vessel 120, as shown in Fig. 1, or, in the alternative, sequentially along the length of reactor vessel 120, as shown in Fig. 2.

Apparatus 100 also comprises support 130 on which nano-scale metal particles are collected. Support 130 can be positioned on legs 132a and 132b or, in the event a source of energy is incorporated into support 130, as a resistance heater, the control and wiring for the source of energy in support 130 can be provided through line 134.

As illustrated in Figs. 1 and 2, when support 130 is disposed within flow-through reactor vessel 120, a port 124 is also provided for removal of support 130 or the nano-scale metal particles deposited thereon. In addition, port 124 should be structured such that it permits the inert gas fed through port 122 and flowing through reactor vessel 120 to egress reactor vessel 120 (as shown in Fig. 1). Port 124 can be sealed. In other words, port 124 can be sealed by a threaded closure or pressure closure or other types of closing structures as would be familiar to the skilled artisan.

As illustrated in Fig. 3, however, support 130 can be disposed external to reactor vessel 120 in flow-through reactor apparatus 100, and can also be a structural support 130 as illustrated in Fig. 3. In this embodiment, flow-through reactor vessel 120 comprises a port 124 through which are impinged on support 130 to thus form and deposit the nano-scale metal particles on support 130. In this way it is no longer necessary to gain access to reactor vessel 120 to collect either support 130 or the nano-scale metal particles deposited thereon. In addition, during the impingement on support 130, either port 126 or support 130 can be moved in order to provide for the formation of the produced nano-scale metal particles on certain specific areas of support 130. This is especially useful if support 130 comprises the end use substrate for the nano-scale metal particles such as the component of a catalytic converter or electrode for fuel cells. Thus, the nano-scale metal particles are only deposited where desired and efficiency and decrease of wasted catalytic metal is facilitated.

As discussed above, reactor vessel 120 can be formed of any suitable material for use in the reaction provided it can withstand the temperature and/or pressure at which decomposition of the carbonyl starting materials occurs. For instance, the reactor vessel should be able to withstand temperatures up to about 250 °C where heat is the energy used to decompose the carbonyl. Although many materials are anticipated as being suitable, including metals, plastics, ceramics and materials such as graphite, preferably reactor vessels 120 are formed of a transparent material to provide for observation of the reaction as it is proceeding. Thus, reactor vessel 120 is preferably formed of quartz or a glass such as Pyrex^{®} brand material available from Coming, Inc. of Coming, New York.

Either a flow of an inert gas such as argon or a vacuum is drawn on reactor vessel 120 and a stream of metal carbonyl(s) fed into reactor vessel 120 via feeders 140a, 140b, 140c. For instance, if heat is the source of energy, the carbonyl(s) should be subject to decomposition and production of nano-scale metal particles at temperatures no greater than 250 °C, more preferably no greater than 200 °C. Other materials, such as oxygen, can also be fed into reactor 120 to partially oxidize the nano-scale metal particles produced by decomposition of the carbonyl, to modify the nano-scale particles and limit subsequent degradation. Contrariwise, a reducing material such as hydrogen can be fed into reactor 120 to facilitate the decomposition of the metal carbonyl into very pure metal nano-scale particles.

The energy for decomposition of the carbonyl is then provided to the carbonyl within reactor vessel 120 by, for instance, heat lamp 150. If desired, reactor vessel 120 can also be cooled by cooling coils 152 to avoid deposit of nano-scale metal particles on the surface of reactor vessel 120 as opposed to support 130. Nano-scale metal particles produced by the decomposition of the metal carbonyls are then deposited in a cyclonic or centrifugal or other type collector (not shown), for storage and/or use.

An embodiment of an apparatus comprises a reactor vessel formed of any material suitable for the purpose and capable of withstanding the exigent conditions for the reaction to proceed inside including conditions of temperature and/or pressure. A reactor vessel can include an access port for providing an inert gas such as argon to fill the internal spaces of reactor vessel, the inert gas being provided by a conventional pump or the like (not shown). Similarly, the port can be used to provide a vacuum in the internal spaces of the reactor vessel by using a vacuum pump or similar device (not shown). In order for the reaction to successfully proceed under vacuum in the reactor vessel, it is not necessary that an extreme vacuum condition be created. Rather negative pressures no less than about 1.33 hPa (1 mm), preferably no less than about 333 hPa (250 mm), are all that are required.

The reactor vessel has disposed therein a support which can be attached directly to the reactor vessel or can be positioned on legs within reactor vessel. The reactor vessel also comprises a sealable opening, in order to permit the reactor vessel to be opened after the reaction is completed to remove the support or remove nano-scale metal particles deposited on the support. The closure can be a threaded closure or a pressure closure or other types of closing systems, provided they are sufficiently air tight to maintain inert gas or the desired level of vacuum within reactor vessel.

The apparatus further comprises at least one feeder, and preferably a plurality of feeders, for feeding reactants, more specifically the carbonyl starting materials, into the reactor vessel. Two feeders are provided, although it is anticipated that other feeders can be employed depending on the nature of the carbonyl(s) introduced into vessel and/or end product nano-scale metal particles desired. Feeders can be fed by suitable pumping apparatus for the carbonyl such as venturi pumps or the like (not shown).

The apparatus further comprises a source of energy capable of causing decomposition of the metal carbonyl. In an embodiment the source of energy comprises a source of heat, such as a heat lamp, although other radiant heat sources can also be employed. In addition, as discussed above, the source of energy can be a source of electromagnetic energy, such as infrared, visible or ultraviolet light, microwave energy, radio waves or other forms of sonic energy, as would be familiar to the skilled artisan, provided the energy employed is capable of causing decomposition of the carbonyl.

In one preferred embodiment, the source of energy can provide energy that is preferentially couple-able to a support so as to facilitate deposit of nano-scale metal particles produced by decomposition of the carbonyl. However, where a source of energy such as heat is employed, which would also heat reactor vessel, it may be desirable to cool reactor vessel using, e.g., cooling tubes such that reactor vessel is maintained at a temperature below the decomposition temperature of the carbonyl. In this way, the metal carbonyl does not decompose at the surfaces of reactor vessel.

In an alternative embodiment, the support itself comprises a source of energy. For instance, a resistance heater powered by a connection can be incorporated into the support. Likewise, other forms of energy for decomposition of the carbonyl can be incorporated into a support.

The support can be formed of any material sufficient to have deposit thereon of nano-scale metal particles produced by decomposition of the carbonyl. In a preferred embodiment, the support comprises the end use substrate on which the nano-scale metal particles are intended to be employed, such as the aluminum oxide or other components of an automotive catalytic converter, or the electrode or membrane of a fuel cell or electrolysis cell. Indeed, where the source of energy is itself embedded in or focused on and associated with the support, selective deposition of the catalytic nano-scale metal particles can be obtained to increase the efficiency of the catalytic reaction and reduce inefficiencies or wasted catalytic metal placement. In other words, the source of energy can be embedded within the support in the desired pattern for deposition of catalyst metal, such that deposition of the catalyst nano-scale metal can be placed where catalytic reaction is desired.

This provides a facile and continuous method for producing nano-scale metal particles which permits selective placement of the particles, direct deposit of the particles on the end use substrate, without the need for extremes of temperature and pressure required by prior art processes.

The invention thus being described, it will be apparent that it can be varied in many ways. Such variations are not to be regarded as a departure from the scope of the present invention

## Claims

1. A process for producing nano-scale particles having an average diameter of no greater than 250 nm, comprising:
a) feeding at least one metal carbonyl into a reactor vessel (120);
b) exposing the metal carbonyl to a source of energy sufficient to decompose the metal carbonyl and produce nano-scale metal particles; and
c) collecting the nano-scale metal particles in a cyclonic collector for storage and/or use.

2. The process of claim 1, wherein the metal carbonyl comprises a non-noble metal carbonyl.

3. The process of claim 1 or claim 2, wherein the reactor vessel (120) comprises a conduit.

4. The process of claim 3, wherein the reactor vessel (120) is a flow-through reactor vessel (120).

5. The process of any one of the preceding claims, wherein the temperature within the reactor vessel (120) is no greater than 250 °C.

6. The process of any one of the preceding claims, wherein a vacuum is maintained within the reactor vessel (120) of no less than 1.33 hPa (1 mm).

7. The process of any one of the preceding claims, wherein a pressure of no greater than 2666 hPa (2000 mm) is maintained with the reactor vessel (120).

8. The process of any one of the preceding claims, wherein the reactor vessel (120) is formed of a material which transparent to the energy supplied by the source of energy employed to decompose the decomposable moiety.

9. The process of any one of the preceding claims, where the source of energy comprises a source of heat.

10. The process of any one of the preceding claims, wherein the support (130) has incorporated therein a resistance heater.

11. The process of any one of the preceding claims, wherein the source of energy comprises a heat lamp (150).

12. The process of any one of the preceding claims, which further comprises cooling the reactor vessel (120).

13. The process of any one of the preceding claims, wherein oxygen is fed into the reactor vessel (120) to partially oxidize the nano-scale metal particles produced by decomposition of the decomposable moiety.

14. The process of any one of the preceding claims, wherein a reducing material is fed into the reactor vessel (120) to reduce the potential for oxidation of the decomposable moiety.

## Patentansprüche

1. Verfahren zur Herstellung von Nanobereich-Partikeln mit einem mittleren Durchmesser von nicht mehr als 250 nm, umfassend:
a) Zufuhr mindestens eines Metallkarbonyls in einen Reaktorbehälter (120);
b) Exponieren des Metallkarbonyls an eine Energiequelle, die ausreicht, um das Metallkarbonyl zu zerlegen und Nanobereich-Metallpartikel zu erzeugen; und
c) Sammeln der Nanobereich-Metallpartikel in einer zyklonischen Sammeleinheit zur Aufbewahrung und/oder Verwendung.

2. Das Verfahren nach Patentanspruch 1, wobei das Metallkarbonyl ein Karbonyl eines nicht-edlen Metalls umfasst.

3. Das Verfahren nach Patentanspruch 1 oder Patentanspruch 2, wobei der Reaktorbehälter (120) ein Rohr aufweist.

4. Das Verfahren nach Patentanspruch 3, wobei der Reaktorbehälter (120) ein Durchströmungsreaktorbehälter (120) ist.

5. Das Verfahren nach irgendeinem der vorangehenden Patentansprüche, wobei die Temperatur im Reaktorbehälter (120) nicht höher ist als 250 °C.

6. Das Verfahren nach irgendeinem der vorangehenden Patentansprüche, wobei ein Vakuum von nicht weniger als 1.33 hPa (1 mm) innerhalb des Reaktorbehälters (120) beibehalten wird.

7. Das Verfahren nach irgendeinem der vorangehenden Patentansprüche, wobei ein Druck von nicht mehr als 2666 hPa (2000 mm) innerhalb des Reaktorbehälters (120) beibehalten wird.

8. Das Verfahren nach irgendeinem der vorangehenden Patentansprüche, wobei der Reaktorbehälter (120) aus einem Material gebildet ist, welches transparent für die Energie ist, die durch die Energiequelle geliefert wird, die angewandt wird, um die zersetzbare Einheit zu zersetzen.

9. Das Verfahren nach irgendeinem der vorangehenden Patentansprüche, wobei die Energiequelle eine Wärmequelle umfasst.

10. Das Verfahren nach irgendeinem der vorangehenden Patentansprüche, wobei der Aufnehmer (130) eine darin eingebaute Widerstandsheizung hat.

11. Das Verfahren nach irgendeinem der vorangehenden Patentansprüche, wobei die Energiequelle eine Heizlampe (150) umfasst.

12. Das Verfahren nach irgendeinem der vorangehenden Patentansprüche, das weiterhin eine Kühlung des Reaktorbehälters (120) umfasst.

13. Das Verfahren nach irgendeinem der vorangehenden Patentansprüche, wobei Sauerstoff in den Reaktorbehälter (120) zugeführt wird, um die Nanobereich-Metallpartikel, die durch Zersetzung der zersetzbaren Einheit hergestellt werden, partiell zu oxidieren.

14. Das Verfahren nach irgendeinem der vorangehenden Patentansprüche, wobei ein Reduktionsmittel in den Reaktorbehälter (120) zugeführt wird, um die Wahrscheinlichkeit der Oxidation der zersetzbaren Einheit zu verringern.

## Revendications

1. Processus pour la production des nanoparticules ayant un diamètre moyen qui n'est pas supérieur à 250 nm, comprenant :
a) l'alimentation d'au moins un carbonyle métallique dans une cuve de réacteur (120) ;
b) l'exposition du carbonyle métallique à une source d'énergie suffisante pour décomposer le carbonyle métallique et produire des nanoparticules métalliques; et
c) la collecte des nanoparticules métalliques dans un collecteur cyclonique pour stockage et/ou utilisation.

2. Processus selon la revendication 1 dans lequel le carbonyle métallique comprend un carbonyle métallique non noble.

3. Processus selon la revendication 1 ou la revendication 2 dans lequel la cuve de réacteur (120) comprend un conduit.

4. Processus selon la revendication 3 dans lequel la cuve de réacteur (120) est une cuve de réacteur d'écoulement (120).

5. Processus selon l'une quelconque des revendications précédentes dans lequel la température à l'intérieur de la cuve de réacteur (120) n'est pas supérieure à 250 °C.

6. Processus selon l'une quelconque des revendications précédentes dans lequel un vide est maintenu à l'intérieur de la cuve de réacteur (120) qui n'est pas inférieur à 1.33 hPa (1 mm).

7. Processus selon l'une quelconque des revendications précédentes dans lequel une pression qui n'est pas supérieure à 2666 hPa (2000 mm) est maintenue dans la cuve de réacteur (120).

8. Processus selon l'une quelconque des revendications précédentes dans lequel la cuve de réacteur (120) est formée en un matériau qui est transparent à l'énergie fournie par la source d'énergie employée pour décomposer la moitié décomposable.

9. Processus selon l'une quelconque des revendications précédentes dans lequel la source d'énergie comprend une source de chaleur.

10. Processus selon l'une quelconque des revendications précédentes dans lequel le support (130) a un chauffage par résistance qui y est incorporé.

11. Processus selon l'une quelconque des revendications précédentes dans lequel la source d'énergie comprend une lampe chauffante (150).

12. Processus selon l'une quelconque des revendications précédentes qui comprend de plus le refroidissement de la cuve de réacteur (120).

13. Processus selon l'une quelconque des revendications précédentes dans lequel l'oxygène est alimenté dans la cuve de réacteur (120) pour oxyder partiellement les nanoparticules métalliques de catalyseur produites par décomposition de la moitié décomposable.

14. Processus selon l'une quelconque des revendications précédentes dans lequel un matériau réducteur est alimenté dans la cuve de réacteur (120) pour réduire le potentiel d'oxydation de la moitié décomposable.
